# EUROPÄISCHE PATENTSCHRIFT

(11) **EP 1 354 150 B1**
(45) Veröffentlichungstag und Bekanntmachung des Hinweises auf die Patenterteilung: **20.04.2005**
(21) Anmeldenummer: 02718024.9
(22) Anmeldetag: 15.01.2002
(51) Int. Cl.: F16H 45/02

(54) **HYDRODYNAMISCHE KOPPLUNGSEINRICHTUNG**
HYDRODYNAMIC CLUTCH DEVICE
SYSTEME D'ACCOUPLEMENT HYDRODYNAMIQUE

(30) Priorität: 22.01.2001 DE 10102718
(43) Veröffentlichungstag der Anmeldung: 22.10.2003
(73) Patentinhaber: ZF Sachs AG, 97424 Schweinfurt (DE)
(72) Erfinder: SASSE, Christoph, 97422 Schweinfurt (DE)
(86) Internationale Anmeldenummer: PCT/EP2002/000314
(87) Internationale Veröffentlichungsnummer: WO 2002/063186

(56) Entgegenhaltungen:
- WO-A-00/03158
- FR-A- 1 258 842
- FR-A- 2 797 012
- JP-A- 2000 230 625
- JP-A- 2000 320 642
- US-B1- 6 264 018

## Beschreibung

Die Erfindung betrifft eine hydrodynamische Kopplungseinrichtung, insbesondere Drehmomentwandler oder Fluidkupplung.

Durch die japanische Patentveröffentlichung P 2000-230625 A, die als nächstkommender Stand der Technik anzusehen ist, ist eine hydrodynamische Kopplungseinrichtung, ausgebildet als Drehmomentwandler, bekannt. Die Kopplungseinrichtung umfasst eine Gehäuseanordnung und ein in der Gehäuseanordnung vorgesehenes Pumpenrad, ein Turbinenrad sowie ein Leitrad zur Bildung eines hydrodynamischen Kreises. Weiterhin ist eine Überbrückungskupplungsanordnung vorgesehen, durch welche wahlweise eine Drehmomentübertragungsverbindung zwischen dem Turbinenrad und der Gehäuseanordnung herstellbar ist. Die Überbrückungskupplungsanordnung weist ein über einen Torsionsschwingungsdämpfer mit dem Turbinenrad zur gemeinsamen Drehung um eine Drehachse verbundenes, im Wesentlichen ringartiges Reibelement mit einem Reiboberflächenbereich auf, sowie ein Anpresselement, welches mit der Gehäuseanordnung zur gemeinsamen Drehung um die Drehachse verbunden ist und durch welches der Reiboberflächenbereich des wenigstens einen Reibelementes zur Herstellung der Drehmomentübertragungsverbindung zwischen Turbinenrad und Gehäuseanordnung beaufschlagbar ist. Das Anpresselement ist radial außerhalb des Reiboberflächenbereiches im Wesentlichen drehstarr mit der Gehäuseanordnung verbunden.

Bei einer derartigen hydrodynamischen Kopplungseinrichtung können insbesondere in einem Zustand, in welchem wenigstens ein Teil des über einen Antriebsstrang zu übertragenden Drehmomentes über die Überbrückungskupplungsanordnung von der Gehäuseanordnung auf das Turbinenrad geleitet wird, im Antriebssystem auftretende Drehschwingungen dadurch abgefangen werden, dass in der Überbrückungskupplungsanordnung ein bestimmter Schlupf zugelassen wird, so dass Drehmomentspitzen zu einer Relativverdrehung zwischen der Gehäuseanordnung und dem Turbinenrad führen können. Dies führt zu einer vergleichsweise großen Belastung der im Bereich der Überbrückungskupplungsanordnung reibend aneinander angreifenden Bauteile oder Oberflächenbereiche, da die zumindest bei größeren Drehmomentschwankungen auftretende, durch Schlupf abgefangene Verlustleistung in Wärme umgewandelt wird.

Um der Anforderung nach immer größeren möglichen Verlustleistungen im Bereich der Überbrückungskupplungsanordnung gerecht werden zu können, wurden Systeme entwickelt, wie sie beispielsweise in der WO 00/03158 beschrieben sind. Bei dem aus dieser Druckschrift bekannten hydrodynamischen Drehmomentwandler weist die Überbrückungskupplungsanordnung zwei mit dem Turbinenrad zur gemeinsamen Drehung gekoppelte Reibelemente auf, zwischen welchen ein mit der Gehäuseanordnung zur gemeinsamen Drehung gekoppeltes Zwischenreibelement positioniert ist. Durch den radial innerhalb des Reiboberflächenbereiches an der Gehäuseanordnung angebundenen und als Anpresselement wirkenden Kupplungskolben werden die einzelnen Reiboberflächenbereiche der Reibelemente, des Zwischenreibelements, des Kupplungskolbens und der Gehäuseanordnung in gegenseitige Wechselwirkung gebracht. Durch das Vorsehen mehrerer gestaffelter, miteinander in Wechselwirkung bringbarer Reibflächenpaarungen kann ohne wesentlichen Bauraumbedarf die insgesamt zur Verfügung gestellte Reiboberfläche deutlich vergrößert werden. Dies hat zur Folge, dass auch die im Schlupfbetrieb auftretende Verlustleistung über eine größere Oberfläche verteilt und somit verbessert und schneller abgeführt werden kann.

Bei der Kopplungseinrichtung gemäß der WO 00/03158 ist zur Verbindung der Reibelemente mit dem Turbinenrad eine Verbindungsanordnung vorgesehen, die das Anpresselement an seinem Außenumfang "umgeht". Diese Verbindung verbraucht Bauraum und erhöht das Gewicht der Kopplungseinrichtung. Die Anordnung der zusätzlichen Masse im radial äußeren Bereich führt zudem zu einer Erhöhung des Massenträgheitsmomentes des Turbinenrades.

Bei der vorgenannten Kopplungseinrichtung ist im Hinblick auf das Gesamtgewicht zu bemerken, daß ferner die Lagerung des radial inneren Bereichs des Anpresselements an einem hierfür axial von der Gehäuseanordnung in deren Innenraum ragenden Abschnitt erfolgt.

Der Erfindung liegt die Aufgabe zugrunde, eine hydrodynamische Kopplungseinrichtung derart auszubilden, dass diese bei einfachem konstruktiven Aufbau hohe Verlustleistungen im Bereich der Überbrückungskupplungsanordnung erträgt.

Die Erfindung ist durch die Merkmale des Anspruchs 1 definiert. Erfindungsgemäß ist vorgesehen, Reibelemente, gewünschtenfalls über einen Drehschwingungsdämpfer, radial innerhalb des Reiboberflächenbereiches im Wesentlichen drehstarr mit dem Turbinenrad zu verbinden. Beispielsweise kann jedes Reibelement einen Reibelementträgerabschnitt umfassen, der sich von dem Reiboberflächenbereich ausgehend nach radial innen erstreckt. Da mehrere Reibelemente vorgesehen sind, kann jedes dieser Elemente einen derart verlaufenden Reibelementträgerabschnitt aufweisen. Denkbar ist jedoch auch, dass ein sich nach radial innen erstreckender, den Reibelementen gemeinsamer Reibelementträgerabschnitt vorgesehen ist, der an seinem Innenumfang mit dem Turbinenrad, insbesondere der Turbinenradnabe, verbunden ist und an seinem Außenumfang einen Reibelementmitnehmer zur Mitnahme, insbesondere formschlüssigen Mitnahme, der einzelnen Reibelemente trägt. Ein gemeinsamer Reibelementträger kann beispielsweise mittels einer Verschweißung mit dem Turbinenrad verbunden sein. Zu bemerken ist hierbei, dass bei einer Verschweißung im Bereich der Turbinenradnabe vorteilhaft jedwede Verformung im Bereich der Turbinenradschale vermieden ist.

Bei der Mehrzahl von Reibelementen ist, jeweils zwischen Reiboberflächenbereichen zweier einander benachbarter Reibelemente ein im Wesentlichen drehstarr mit dem Anpresselement verbundenes Zwischenreibelement angeordnet. Die drehstarre Verbindung mit dem Anpresselement gewährleistet in einfacher Weise die Mitnahme des Zwischenreibelementes bei einer Drehung der Gehäuseanordnung. Bevorzugt erstreckt sich jedes Zwischenreibelement oder ein mehreren Zwischenreibelementen gemeinsamer Zwischenreibelementträger in Mitnahmeaussparungen des Anpresselementes eingreifend.

Vorzugsweise ist das Anpresselement über eine elastische Einrichtung, insbesondere eine Tangentialblattfederanordnung, mit der Gehäuseanordnung verbunden. Um durch eine derartige elastische Einrichtung einen vergleichsweise hohen Drehmomentübertrag zwischen dem Anpresselement und der Gehäuseanordnung zu ermöglichen, sollte diese Einrichtung in einem radial äußeren Bereich des Anpresselements angeordnet sein. Im Falle einer Tangentialblattfederanordnung ist es zweckmäßig, das Anpresselement an dessen Außenumfang mit radialen Einbuchtungen vorzusehen, so dass bei der Montage der Kopplungseinrichtung die Blattfedern zunächst an am Außenumfang verbleibenden radialen Laschen des Anpresselementes befestigt, z.B. vernietet, werden können, um später im Bereich der radialen Einbuchtungen befindliche freie Enden der Blattfedern mit einer axial sich erstreckenden Innenfläche der Gehäuseanordnung zu verbinden. Eine gehäuseseitige Vernietung der Blattfederenden erfolgt vorzugsweise an Gehäusezapfen, die durch eine lokale Verformung (z.B. Eindrücken) des Gehäusematerials ausgebildet sind.

Der oder die Reibelementträgerabschnitte sollten sich zur Materialeinsparung im Wesentlichen axial erstrecken. Es ist jedoch durchaus möglich, einen davon abweichenden Verlauf, insbesondere einen im Wesentlichen geradlinig schrägen Verlauf, vorzusehen, beispielsweise um einen axialen Versatz zwischen dem Reiboberflächenbereich und derjenigen Stelle zu überbrücken, an der die Verbindung zum Turbinenrad erfolgt.

Ein besonders einfach zu realisierender Aufbau einer hydrodynamischen Kopplungseinrichtung, welche nach dem Prinzip eines 2-Leitungssystems arbeitet, kann dadurch erhalten werden, dass durch das Anpresselement ein Innenraum der Gehäuseanordnung in einen ersten Raumbereich, in welchem das Turbinenrad angeordnet ist, und einen zweiten Raumbereich unterteilt ist und dass zum Austausch von in dem Innenraum vorgesehenem Arbeitsfluid in den ersten Raumbereich Arbeitsfluid einleitbar und aus dem zweiten Raumbereich Arbeitsfluid ausleitbar ist oder umgekehrt. Um bei einem derartigen System trotz einer radial äußeren Dichtung des Anpresselementes durch die aneinander anliegenden Reiboberflächenbereiche im eingerückten Zustand der Überbrückungskupplungsanordnung einen Fluidaustausch zu ermöglichen, wird vorgeschlagen, dass in dem Anpresselement radial innerhalb des Reiboberflächenbereiches wenigstens eine Fluiddurchtrittsöffnung zum Ermöglichen eines Fluidaustausches zwischen dem ersten Raumbereich und dem zweiten Raumbereich vorgesehen ist. Ferner wird zur Verbesserung einer Fluidkühlung im eingerückten oder schlupfenden Zustand weiter vorgeschlagen, dass in dem Reiboberflächenbereich des wenigstens einen Reibelementes eine vorzugsweise mit bogenartiger Formgebung ausgebildete Strömungskanalanordnung vorgesehen ist. Diese Strömungskanalanordnung ist dann vorzugsweise zu den beiden Raumbereichen hin offen, so dass bedingt durch die in diesen Kupplungszuständen ohnehin vorhandene Druckdifferenz zwischen den beiden Raumbereichen ein Fluiddurchtritt durch die Strömungskanalanordnung hindurch stattfinden wird und dabei die in diesem räumlichen Bereich entstehende Wärmeenergie effizient abgeführt werden kann.

Selbstverständlich kann die erfindungsgemäße Kopplungseinrichtung auch als sogenanntes 3-Leitungssystem ausgebildet sein, bei dem zwei Fluidleitungen zum Fluidaustausch und eine weitere Fluidleitung zur fluiddruckgesteuerten Betätigung des Kupplungskolbens vorgesehen ist.

Vorzugsweise ist bei der erfindungsgemäßen Kopplungseinrichtung vorgesehen, dass die Gehäuseanordnung eine an die Kontur der Überbrückungskupplungsanordnung angepasste Formgebung mit einer axialen Ausbuchtung im Bereich der Überbrückungskupplungsanordnung aufweist. Diese Maßnahme hat zur Folge, dass die Gehäuseanordnung insbesondere in ihrem auch für die Überbrückungskuppiungsanordnung beziehungsweise für deren Wirkung bereitgestellten Bereich mit höherer Steifigkeit ausgebildet ist. Dies führt zu einer deutlich geringeren Ausbauchung beziehungsweise einem deutlich geringeren Aufblähen der Gehäuseanordnung unter dem im Gehäuseinneren vorherrschenden Fluiddruck. Daher kann es selbst bei in radialer Richtung relativ breiten Reibflächenbereichen nicht zu einer durch Ausbauchung induzierten Kantenbelastung von Reibbelägen oder dergleichen kommen.

Zur Ankopplung der erfindungsgemäßen Kopplungseinrichtung an eine Antriebswelle kann ein im Wesentlichen ringartig ausgebildetes Ankoppelelement vorgesehen sein, das in seinem radial inneren Bereich an eine Außenseite der Gehäuseanordnung, vorzugsweise durch Laserschweißen, angebunden ist und in seinem radial äußeren Bereich zur Kopplung mit einem mit einer Antriebswelle fest verbundenen oder verbindbaren zweiten Ankoppelelement ausgebildet ist.

Zur Erlangung einer günstigen Massenverteilung mit der Folge eines geringeren Massenträgheitsmomentes beziehungsweise zur Vergrößerung der Reibflächenbereiche lässt sich vorsehen, dass ein Verhältnis eines Strömungsaußendurchmessers im Bereich des Turbinenrads zu einem Reibaußendurchmesser des wenigstens einen Reibelements im Bereich von 1,30 bis 1,80, vorzugsweise 1,35 bis 1,70, liegt und/oder dass ein Verhältnis eines Reibaußendurchmessers des wenigstens einen Reibelements zu einem Reibinnendurchmesser des wenigstens einen Reibelements im Bereich von 1,10 bis 1,30, vorzugsweise 1,15 bis 1,25, liegt.

Die Erfindung wird nachfolgend anhand eines Ausführungsbeispiels mit Bezug auf die beigefügten Zeichnungen näher beschrieben. Es zeigt:
- Fig. 1: eine Teil-Axialschnittansicht einer erfindungsgemäßen hydrodynamischen Kopplungseinrichtung, und
- Fig. 2: eine Detailansicht in Richtung des Pfeils II in Fig. 1.

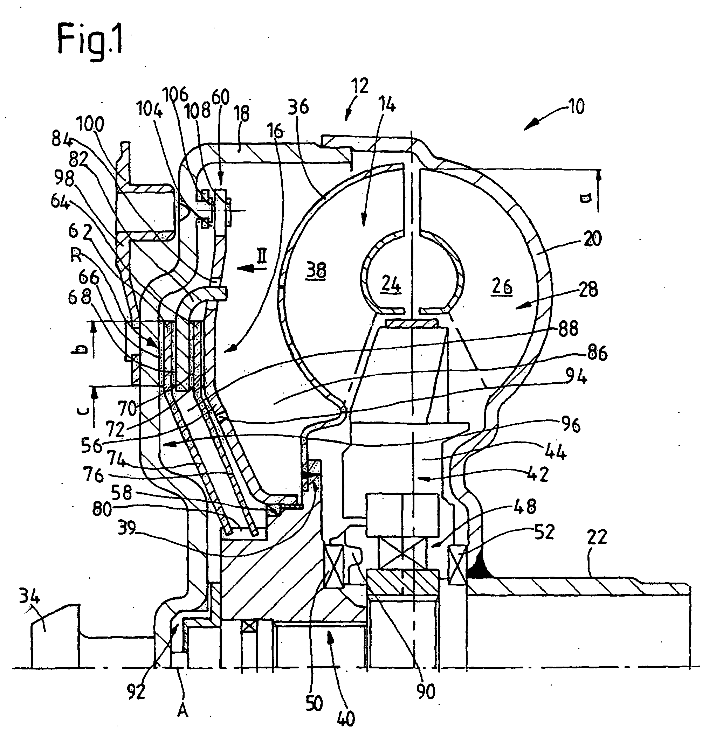

Figur 1 zeigt einen hydrodynamischen Drehmomentwandler 10, umfassend eine Gehäuseanordnung 12, ein in der Gehäuseanordnung 12 vorgesehenes Turbinenrad 14 sowie eine Überbrückungskupplungsanordnung 16.

Die Gehäuseanordnung 12 umfasst einen Gehäusedeckel 18, der in seinem radial äußeren Bereich beispielsweise durch Verschweißung mit einer Pumpenradschale 20 fest verbunden ist. Radial innen ist die Pumpenradschale 20 mit einer Pumpenradnabe 22 fest verbunden. An ihrer zum Gehäuseinnenraum 24 hingewandten Innenseite trägt die Pumpenradschale 20 eine Mehrzahl von in Umfangsrichtung aufeinander folgenden Pumpenradschaufeln 26. Die Pumpenradschale 20 bildet zusammen mit der Pumpenradnabe 22 und den Pumpenradschaufein 26 im Wesentlichen ein Pumpenrad 28. Der Gehäusedeckel 18 ist an seiner Außenseite mit einem koaxial zu einer Drehachse A angeordneten Zentrierzapfen 34 versehen, welcher in eine entsprechende Zentrierausnehmung einer nicht dargestellten Antriebswelle, beispielsweise Kurbelwelle einer Brennkraftmaschine, zur Ausrichtung der Drehachse A des Drehmomentwandlers 10 bezüglich der Drehachse der Antriebswelle eingesetzt wird.

Das Turbinenrad 14 ist im Innenraum 24 des Wandlers 10 angeordnet und umfasst im radial äußeren Bereich eine Turbinenradschale 36, welche an ihrer dem Pumpenrad 28 zugewandten Seite eine Mehrzahl von Turbinenradschaufeln 38 trägt. Radial innen ist die Turbinenradschale 36 beispielsweise durch Verschweißung oder Verschraubung bei 39 mit einer Turbinenradnabe 40 fest verbunden. Die Turbinenradnabe 14 wiederum kann mit einer Abtriebswelle, beispielsweise einer Getriebeeingangswelle, drehfest verbunden werden.

Axial zwischen dem Pumpenrad 28 und dem Turbinenrad 14 ist ein Leitrad 42 vorgesehen. Das Leitrad 42 umfasst auf einem Leitradring 44 eine Mehrzahl von Leitradschaufeln 46, die zwischen den radial inneren Endbereichen der Pumpenradschaufeln 26 und der Turbinenradschaufeln 38 positioniert sind. Der Leitradring 44 ist über eine Freilaufanordnung 48 auf einem nicht dargestellten Stützelement, beispielsweise einer Stützhohlwelle, in einer Richtung um die Drehachse A herum drehbar, gegen eine Drehung in der anderen Drehrichtung jedoch blockiert getragen. In axialer Richtung ist das Leitrad 42 über zwei Lageranordnungen 50, 52 bezüglich des Pumpenrads 28 einerseits und bezüglich des Turbinenrads 14 andererseits axial abgestützt.

Die Überbrückungskupplungsanordnung 16 dient der Herstellung einer direkten mechanischen Drehmomentübertragungsverbindung zwischen dem Turbinenrad 14 und der Gehäuseanordnung 12 und umfasst einen Kopplungskolben 56, der mit einem radial inneren zylindrischen Abschnitt auf einer Außenumfangsfläche der Turbinenradnabe 40 über ein Gleitlager 58 axial verlagerbar und relativ zum Turbinenrad 14 drehbar gelagert ist. Der Kupplungskolben 56 ist an seinem radial äußeren Endbereich über eine elastische Anordnung, im dargestellten Beispiel eine Tangentialblattfederanordnung 60, im Wesentlichen drehstarr mit dem Gehäusedeckel 18 verbunden. Der Kupplungskolben 56 ist hierdurch bezüglich des Gehäusedeckels 18 axial bewegbar gehalten.

Die Überbrückungskupplungsanordnung 16 umfasst ferner zwei Lamellen-oder Reibelemente 62, 64, welche in ihrem radial äußeren Bereich jeweils an beiden axialen Stirnflächen Reibbeläge 66, 68, 70, 72 tragen. In ihrem radial inneren Bereich umfasst jedes Reibelement 62, 64 einen Reibelementträgerabschnitt 74, 76, der sich von einem durch die Ausdehnung der Reibbeläge 66, 68, 70, 72 definierten Reiboberflächenbereich R ausgehend nach radial innen erstreckt. Im dargestellten Ausführungsbeispiel sind die Reibelementträgerabschnitte 74, 76 einstückig mit den die Reibbeläge tragenden Abschnitten der Reibelemente 62, 64 ausgebildet. Die Reibelementträgerabschnitte 74, 76 sind an ihrem radial inneren Endbereich mit einer Innenverzahnung ausgebildet, die mit einer entsprechenden Außenverzahnung 80 der Turbinenradnabe 40 in Mitnahmeeingriff steht. Es ist somit eine drehstarre Verbindung zwischen den Reibelementen 62, 64 und dem Turbinenrad 14 geschaffen.

Axial zwischen den beiden Reibelementen 62, 64 liegt ein Zwischenreibelement 82, das sich von dem Reiboberflächenbereich R ausgehend nach radial außen in Mitnahmeaussparungen 84 des Kupplungskolbens 56 eingreifend erstreckt. Es ist somit eine drehstarre Verbindung zwischen dem Zwischenreibelement 82 und dem Kupplungskolben 56 und damit der Gehäuseanordnung 12 geschaffen.

Der Innenraum 24 der Gehäuseanordnung 12 wird durch den Kupplungskolben 56 in einen ersten Raumbereich 86, in welchem das Turbinenrad 14 angeordnet ist, und einen zweiten Raumbereich 88 unterteilt. Zur Herstellung des Überbrückungszustandes wir der Fluiddruck im Raumbereich 86 über den im Raumbereich 88 vorherrschenden Fluiddruck hinaus erhöht. Zur Erhöhung des Fluiddrucks im Raumbereich 86 kann über eine Durchtrittsöffnungsanordnung 90 im Bereich des Leitrads 42 von einer nicht dargestellten Fluidpumpe über einen beispielsweise zwischen der nicht dargestellten Abtriebswelle und einer Stützhohlwelle gebildeten Zwischenraum Fluid in den Raumbereich 86 eingeleitet werden. Im nicht überbrückten Zustand kann das Fluid dann vom Raumbereich 86 unter Umströmung der Reibelemente 62, 64 in den Raumbereich 88 eintreten und über eine das Fluid nach radial innen führende Durchtrittsöffnungsanordnung 92 durch die Abtriebswelle hindurch und von dort zu einem nicht dargestellten Fluidreservoir strömen. Um im überbrückten Zustand, in welchem der Druck des Kupplungskolbens 56 zu einer Fluidabdichtung im Bereich der Reibbeläge 66, 68, 70, 72 führt, auch einen Fluidaustausch zu ermöglichen, ist in dem Kupplungskolben 56 radial innerhalb des Reiboberflächenbereiches R wenigstens eine Fluiddurchtrittsöffnung 94 vorgesehen, die den Fluidaustausch zwischen dem ersten Raumbereich 86 und dem zweiten Raumbereich 88 ermöglicht. Ferner können die Reibbeläge 66, 68, 70, 72 Belagsnutungen mit beispielsweise bogenartigem Verlauf aufweisen, die im radial äußeren Bereich zum Raumbereich 86 hin offen sind und im radial inneren Bereich zum Raumbereich 88 hin offen sind, so dass auch im vollständig überbrückten oder im schlupfenden Zustand die im Bereich der Reibbeläge 66, 68, 70, 72 entstehende Reibungswärme durch die Fluiddurchströmung rascher abgeführt werden kann.

Um eine weitere Minimierung des Massenträgheitsmomentes zu erzielen, ist der Reibaußendurchmesser b der Reibbeläge 66, 68, 70, 72 vergleichsweise klein gehalten. So weist im bevorzugten Falle ein Verhältnis des Fluidströmungsaußendurchmessers a, welcher näherungsweise dem Außendurchmesser des Turbinenrads 32 entspricht, bezüglich des Reibaußendurchmessers b einen Wert im Bereich von 1,35 bis 1,70 auf.

Des Weiteren liegt das Verhältnis zwischen dem Reibaußendurchmesser b und dem Reibinnendurchmesser c der Reibbeläge 66, 68, 70, 72 vorzugsweise in einem Bereich von 1,15 bis 1,25. Dies führt zu einer vergleichsweise großen Radialerstreckung der ringartig ausgebildeten Reibbeläge und damit zu einer vergleichsweise großen möglichen Verlustleistung im Bereich der Überbrückungskupplungsanordnung.

Die Gehäuseanordnung 12 weist eine an die Kontur der Überbrückungskupplungsanordnung 16 angepasste Formgebung mit einer axialen Ausbuchtung 96 im Bereich der Überbrückungskupplungsanordnung 16 auf. Durch die radial beiderseits dieser Ausbuchtung 96 abgeknickte Kontur des Gehäusedeckels 18 wird somit eine vorteilhafte Versteifung der Gehäuseanordnung 12 geschaffen. Dies hat zur Folge, dass durch das im Innenraum 24 unter Druck vorgesehene Arbeitsfluid ein Ausbauchen oder Aufblähen des Gehäuses 12 mit der nachteiligen Folge einer Kantenbelastung im Bereich des äußeren Reibbelages 66 vermieden werden kann. An Stelle der axialen Ausbuchtung 96 kann alternativ auch eine axiale Einbuchtung vorgesehen sein, durch die die gleiche vorteilhafte Wirkung erzielt werden kann und darüber hinaus der axiale Bauraum weiter verkleinert werden kann. In letzterem Fall ist es zur optimalen Ausnutzung des Bauraums günstig, wenn der Reiboberflächenbereich R der Überbrückungskupplungsanordnung 16 vollständig radial innerhalb des radialen Zentrums der Turbinenradschale 36 angeordnet ist.

Es sei darauf hingewiesen, dass der Drehmomentwandler 10 selbstverständlich auch mehr als zwei Reibelemente 62, 64, beispielsweise drei Reibelemente, und dann eine entsprechend größere Anzahl an Zwischenreibelementen 82 aufweisen kann. Auch kann lediglich ein Reibelement eingesetzt werden.

Ein weiterer Vorteil des dargestellten Drehmomentwandlers 10 liegt in der Art und Weise der Anbindung desselben an eine Antriebswelle. Man erkennt in Figur 1 links ein ringartig ausgebildetes Ankoppelelement 98, welches beispielsweise in axialer Richtung abgekröpft ausgebildet ist und beispielsweise aus Blech geformt ist. In seinem radial inneren Bereich ist dieses Ankoppelelement 98 vorzugsweise durch Laserschweißen an der Außenseite des Gehäusedeckels 18 angebracht.

Die Laserschweißung ist hier vorteilhaft, da sie praktisch keine Verformung des Gehäusedeckels 18 zur Folge hat und jedwede Verformung in dem Bereich, in welchem der Gehäusedeckel 18 an seiner Innenseite eine Reibfläche bereitstellt, nachteilig wäre. In seinem radial äußeren Bereich trägt das Ankoppelelement 98 mehrere Muttemelemente 100 oder dergleichen, in welche Schraubbolzen oder dergleichen eingeschraubt werden können, um das Ankoppelelement 98 mit einer Flexplatte oder dergleichen zu verbinden, wobei eine derartige Platte in an sich bekannter Weise in ihrem radial inneren Bereich an eine Antriebswelle, z.B. einen Kurbelwellenflansch, angeschraubt sein kann.

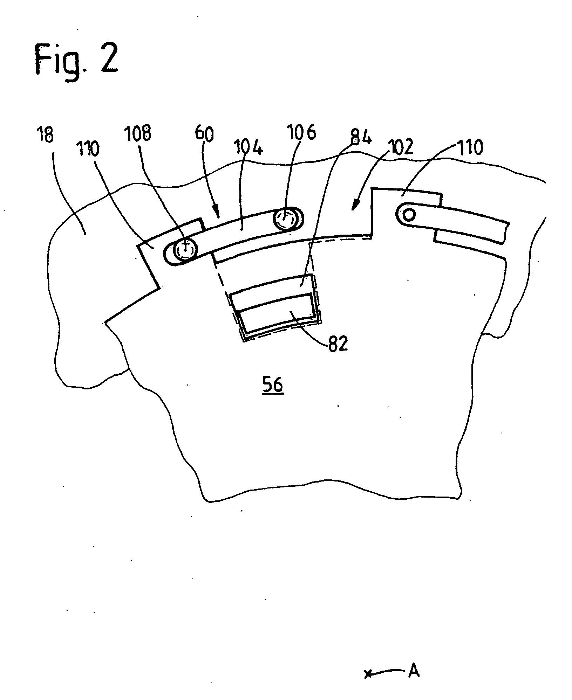

Figur 2 zeigt eine in Figur 1 mit II gekennzeichnete Ansicht im Bereich der im Wesentlichen drehstarren Verbindung zwischen dem Kupplungskolben 56 und der Innenseite des Gehäusedeckels 18. Man erkennt am Außenumfang des Kupplungskolbens 56 eine von mehreren radialen Einbuchtungen 102, in deren Bereich jeweils ein gehäuseseitiges Ende einer Tangentialblattfeder 104 durch Vernietung an einem Deckelzapfen 106 angebunden ist. Das kolbenseitige Ende der Tangentialblattfeder 104 ist durch eine Vernietung bei 108 an radialen Laschen 110 des Kupplungskolbens 56 befestigt. In dieser Weise sind über den Umfang des Kupplungskolbens 56 verteilt mehrere Tangentialblattfedem 104 vorgesehen, die eine im Betrieb der Überbrückungskupplungsanordnung 16 erforderliche Axialverschiebbarkeit des Kupplungskolbens 56 gewährleisten.

Ebenfalls in Umfangsrichtung verteilt angeordnet sind die Mitnahmeaussparungen 84 des Kupplungskolbens 56, in welche radial nach außen abstehende Laschen des Zwischenreibelementes 82 eingreifen. Diese Mitnahmeaussparungen 84 können alternativ auch jeweils durch einen Abschnitt (z.B. den Grund) der radialen Einbuchtungen 102 bereitgestellt werden, z.B. wie es in Figur 2 gestrichelt dargestellt ist.

In einer bevorzugten Ausführungsform sind die Deckelzapfen 106, wie in Figur 1 dargestellt, durch Eindrücken des Gehäusedeckels 18 ausgebildet.

Selbstverständlich können bei der erfindungsgemäßen Kopplungseinrichtung in verschiedenen Bereichen Veränderungen vorgenommen werden, ohne von den Prinzipien der Erfindung abzuweichen. Beispielsweise könnten das oder die Zwischenreibelemente auch mit dem Gehäusedeckel drehfest gekoppelt sein. Auch könnte radial innerhalb des Reiboberflächenbereiches ein den Reibelementen gemeinsamer Reibelementträger vorgesehen sein, der die einzelnen Reibelemente axial verlagerbar hält und an seinem radial inneren Bereich mit dem Turbinenrad drehfest gekoppelt ist. Ein derartiger Reibelementträger kann auch als Torsionsschwingungsdämpfer ausgebildet sein, um besonderen schwingungstechnischen Erfordernissen zu genügen.

## Patentansprüche

1. Hydrodynamische Kopplungseinrichtung, insbesondere Drehmomentwandler oder Fluidkupplung, , **gekennzeichnet durch**:
- eine Gehäuseanordnung (12),
- ein in der Gehäuseanordnung (12) vorgesehenes Turbinenrad (14),
- eine Überbrückungskupplungsanordnung (16), **durch** welche wahlweise eine Drehmomentübertragungsverbindung zwischen dem Turbinenrad (14) und der Gehäuseanordnung (12) herstellbar ist,
wobei die Überbrückungskupplungsanordnung (16) umfasst:
- eine Mehrzahl von mit dem Turbinenrad (14) zur gemeinsamen Drehung um eine Drehachse (A) verbundene, im Wesentlichen ringartige Reibelemente (62, 64) mit Reiboberflächenbereichen (R),
wobei die Reibelemente (62, 64) radial innerhalb des Reiboberflächenbereiches (R) im Wesentlichen drehstarr mit dem Turbinenrad (14) verbunden sind,
- ein Anpresselement (56), welches mit der Gehäuseanordnung (12) zur gemeinsamen Drehung um die Drehachse (A) verbunden ist, **durch** welches die Reiboberflächenbereiche (R) der Reibelemente (62, 64) zur Herstellung der Drehmomentübertragungsverbindung zwischen Turbinenrad (14) und Gehäuseanordnung (12) beaufschlagbar sind, und welches radial außerhalb der Reiboberflächenbereiche (R) im Wesentlichen drehstarr mit der Gehäuseanordnung (12) verbunden ist, und
- wobei jeweils zwischen Reiboberflächenbereichen (R) zweier einander benachbarter Reibelemente (62, 64) ein Zwischenreibelement (82) angeordnet und im Wesentlichen drehstarr mit dem Anpresselement (56) verbunden ist.

2. Hydrodynamische Kopplungseinrichtung nach Anspruch 1,
**dadurch gekennzeichnet, dass** das Anpresselement (56) über eine elastische Einrichtung (60), insbesondere eine Tangentialblattfederanordnung, mit der Gehäuseanordnung (12) verbunden ist.

3. Hydrodynamische Kopplungseinrichtung nach Anspruch 1 oder 2, **dadurch gekennzeichnet, dass** das Anpresselement (56) an dem Turbinenrad (14) axial verlagerbar und relativ zum Turbinenrad (14) drehbar gelagert (58) ist.

4. Hydrodynamische Kopplungseinrichtung nach Anspruch 1,
**dadurch gekennzeichnet, dass** das Zwischenreibelement (82) sich in Mitnahmeaussparungen (84) des Anpresselementes (56) eingreifend erstreckt.

5. Hydrodynamische Kopplungseinrichtung nach einem der Ansprüche 1 bis 4, wobei durch das Anpresselement (56) ein Innenraum (24) der Gehäuseanordnung (12) in einen ersten Raumbereich (86), in welchem das Turbinenrad (14) angeordnet ist, und einen zweiten Raumbereich (88) unterteilt ist, und dass zum Austausch von in dem Innenraum (24) vorgesehenem Arbeitsfluid in den ersten Raumbereich (86) Arbeitsfluid einleitbar und aus dem zweiten Raumbereich (88) Arbeitsfluid ausleitbar ist oder umgekehrt,
**dadurch gekennzeichnet, dass** in dem Anpresselement (56) radial innerhalb des Reiboberflächenbereiches (R) wenigstens eine Fluiddurchtrittsöffnung (94) zum Ermöglichen eines Fluidaustausches zwischen dem ersten Raumbereich (86) und dem zweiten Raumbereich (88) vorgesehen ist.

6. Hydrodynamische Kopplungseinrichtung nach Anspruch 5, **dadurch gekennzeichnet, dass** in den Reiboberflächenbereichen (R) der Reibelemente (62, 64) eine vorzugsweise mit bogenartiger Formgebung ausgebildete Strömungskanalanordnung vorgesehen ist.

7. Hydrodynamische Kopplungseinrichtung nach einem der Ansprüche 1 bis 6,
**dadurch gekennzeichnet, dass** die Gehäuseanordnung (12) eine an die Kontur der Überbrückungskupplungsanordnung (16) angepasste Formgebung mit einer axialen Ausbuchtung (96) im Bereich der Überbrückungskupplungsanordnung (16) aufweist.

8. Hydrodynamische Kopplungseinrichtung nach einem der Ansprüche 1 bis 7,
**gekennzeichnet durch** ein im Wesentlichen ringartig ausgebildetes erstes Ankoppelelement (98), das in seinem radial inneren Bereich an eine Außenseite der Gehäuseanordnung (12) vorzugsweise **durch** Laserschweißen angebunden ist, und in seinem radial äußeren Bereich zur Kopplung mit einem mit einer Antriebswelle fest verbundenen oder verbindbaren zweiten Ankoppelelement (100) ausgebildet ist.

9. Hydrodynamische Kopplungseinrichtung nach einem der Ansprüche 1 bis 8,
**dadurch gekennzeichnet, dass** ein Verhältnis eines Strömungsaußendurchmessers (a) im Bereich des Turbinenrads (14) zu einem Reibaußendurchmesser (b) der Reibelemente (62, 64) im Bereich von 1,30 bis 1,80, vorzugsweise 1,35 bis 1,70, liegt, und/oder dass ein Verhältnis eines Reibaußendurchmessers (b) der Reibelemente (62, 64) zu einem Reibinnendurchmesser (c) der Reibelemente (62, 64) im Bereich von 1,10 bis 1,30, vorzugsweise 1,15 bis 1,25, liegt.

## Claims

1. Hydrodynamic coupling device, in particular torque converter or fluid clutch, **characterized by**:
- a housing arrangement (12),
- a turbine wheel (14) provided in the housing arrangement (12),
- a lock-up clutch arrangement (16) enabling the optional production of a torque transmission connection between the turbine wheel (14) and the housing arrangement (12),
the lock-up clutch arrangement (16) comprising:
- a plurality of substantially annular friction elements (62, 64) which are connected to the turbine wheel (14) for rotation together about an axis of rotation (A) and have friction surface regions (R), the friction elements (62, 64) being connected substantially rigidly in terms of rotation to the turbine wheel (14) radially within the friction surface region (R),
- a pressure element (56) which is connected to the housing arrangement (12) for rotation together about the axis of rotation (A) and can be used to act upon the friction surface regions (R) of the friction elements (62, 64) to produce the torque transmission connection between the turbine wheel (14) and the housing arrangement (12), and which is connected substantially rigidly in terms of rotation to the housing arrangement (12) radially outside the friction surface regions (R), and
- an intermediate friction element (82) being arranged in each case between friction surface regions (R) of two adjacent friction elements (62, 64) and being connected substantially rigidly in terms of rotation to the pressure element (56).

2. Hydrodynamic coupling device according to Claim 1, **characterized in that** the pressure element (56) is connected to the housing arrangement (12) via an elastic device (60), in particular a tangential leaf-spring arrangement.

3. Hydrodynamic coupling device according to Claim 1 or 2, **characterized in that** the pressure element (56) is mounted (58) so as to be axially displaceable on the turbine wheel (14) and rotatable relative to the turbine wheel (14).

4. Hydrodynamic coupling device according to Claim 1, **characterized in that** the intermediate friction element (82) extends in a manner which engages in driving cut-outs (84) in the pressure element (56).

5. Hydrodynamic coupling device according to one of Claims 1 to 4, an inner space (24) of the housing arrangement (12) being divided by the pressure element (56) into a first space region (86) in which the turbine wheel (14) is arranged and into a second space region (88), and, in order to exchange operating fluid which is provided in the inner space (24), it being possible to introduce operating fluid into the first space region (86) and to remove operating fluid out of the second region (88) or vice versa, **characterized in that** at least one fluid passage opening (94) is provided in the pressure element (56) radially within the friction surface region (R) in order to make the exchange of fluid possible between the first space region (86) and the second space region (88).

6. Hydrodynamic coupling device according to Claim 5, **characterized in that** a flow-channel arrangement preferably having an arcuate shape is provided in the friction surface regions (R) of the friction elements (62, 64).

7. Hydrodynamic coupling device according to one of Claims 1 to 6, **characterized in that** the housing arrangement (12) has a shaping which is matched to the contour of the lock-up clutch arrangement (16) and has an axial hollowed-out portion (96) in the region of the lock-up clutch arrangement (16).

8. Hydrodynamic coupling device according to one of Claims 1 to 7, **characterized by** a first coupling element (98) which is of substantially annular design, is joined in its radially inner region to an outer side of the housing arrangement (12), preferably by laser welding, and is designed in its radially outer region for coupling to a second coupling element (100) which is connected fixedly or can be connected fixedly to a drive shaft.

9. Hydrodynamic coupling device according to one of Claims 1 to 8, **characterized in that** a ratio of a flow outside diameter (a) in the region of the turbine wheel (14) to a friction outside diameter (b) of the friction elements (62, 64) is in the range from 1.30 to 1.80, preferably from 1.35 to 1.70, and/or **in that** a ratio of a friction outside diameter (b) of the friction elements (62, 64) to a friction inside diameter (c) of the friction elements (62, 64) is in the range from 1.10 to 1.30, preferably from 1.15 to 1.25.

## Revendications

1. Dispositif d'accouplement hydrodynamique, en particulier convertisseur de couple ou accouplement fluide, **caractérisé par** :
- un agencement de boîtier (12),
- une roue de turbine (14) prévue dans l'agencement de boîtier (12),
- un agencement d'embrayage de court-circuitage (16), grâce auquel on peut réaliser au choix une liaison de transfert de couple entre la roue de turbine (14) et l'agencement de boîtier (12),
l'agencement d'embrayage de court-circuitage (16) comprenant :
- une pluralité d'éléments de friction (62, 64) de type essentiellement annulaire, reliés à la roue de turbine (14) en vue d'une rotation commune autour d'un axe de rotation (A), avec des régions de surface de friction (R), les éléments de friction (62, 64) étant reliés de manière essentiellement solidaire en rotation avec la roue de turbine (14) radialement à l'intérieur de la région de surface de friction (R),
- un élément de pression de contact (56) qui est relié à l'agencement de boîtier (12) en vue d'une rotation commune autour de l'axe de rotation (A), grâce auquel les régions de surface de friction (R) des éléments de friction (62, 64) peuvent être sollicitées pour la réalisation d'une liaison de transfert de couple entre la roue de turbine (14) et l'agencement de boîtier (12), et qui est relié radialement en dehors des régions de surface de friction (R) de manière essentiellement solidaire en rotation avec l'agencement de boîtier (12), et
- un élément de friction intermédiaire (82) étant disposé à chaque fois entre des régions de surface de friction (R) de des éléments deux friction adjacents (62, 64) et étant relié de manière essentiellement solidaire en rotation avec l'élément de pression de contact (56).

2. Dispositif d'accouplement hydrodynamique selon la revendication 1,
**caractérisé en ce que** l'élément de pression de contact (56) est relié à l'agencement de boîtier (12) par l'intermédiaire d'un dispositif élastique (60), notamment d'un agencement de ressort à lame tangentiel.

3. Dispositif d'accouplement hydrodynamique selon la revendication 1 ou 2, **caractérisé en ce que** l'élément de pression de contact (56) est déplaçable axialement sur la roue de turbine (14) et est monté (58) de manière à pouvoir tourner par rapport à la roue de turbine (14).

4. Dispositif d'accouplement hydrodynamique selon la revendication 1,
**caractérisé en ce que** l'élément de friction intermédiaire (82) s'étend en venant en prise dans des évidements d'entraînement (84) de l'élément de pression de contact (56).

5. Dispositif d'accouplement hydrodynamique selon l'une quelconque des revendications 1 à 4, dans lequel un espace interne (24) de l'agencement de boîtier (12) est divisé par l'élément de pression de contact (56) en une première région spatiale (86) dans laquelle la roue de turbine (14) est disposée, et une deuxième région spatiale (88), et où pour l'échange du fluide de travail prévu dans l'espace interne (24), du fluide de travail peut être introduit dans la première région spatiale (86) et peut être évacué hors de la deuxième région spatiale (88) ou inversement,
**caractérisé en ce que** l'on prévoit dans l'élément de pression de contact (56) radialement à l'intérieur de la région de surface de friction (R), au moins une ouverture de passage de fluide (94) pour permettre un échange de fluide entre la première région spatiale (86) et la deuxième région spatiale (88).

6. Dispositif d'accouplement hydrodynamique selon la revendication 5, **caractérisé en ce que** l'on prévoit dans les régions de surface de friction (R) des éléments de friction (62, 64) un agencement de canal d'écoulement réalisé de préférence avec une forme de type cintré.

7. Dispositif d'accouplement hydrodynamique selon l'une quelconque des revendications 1 à 6,
**caractérisé en ce que** l'agencement de boîtier (12) présente une forme adaptée au contour de l'agencement d'embrayage de court-circuitage (16) avec un renflement axial (96) dans la région de l'agencement d'embrayage de court-circuitage (16).

8. Dispositif d'accouplement hydrodynamique selon l'une quelconque des revendications 1 à 7,
**caractérisé par** un premier élément d'accouplement (98) de type essentiellement annulaire, qui est relié dans sa région radialement interne à un côté extérieur de l'agencement de boîtier (12), de préférence par une soudure au laser, et qui est réalisé dans sa région radialement externe en vue de l'accouplement avec un deuxième élément d'accouplement (100) relié fixement ou pouvant être relié fixement à un arbre d'entraînement.

9. Dispositif d'accouplement hydrodynamique selon l'une quelconque des revendications 1 à 8,
**caractérisé en ce qu'**un rapport d'un diamètre extérieur d'écoulement (a) dans la région de la roue de turbine (14) à un diamètre extérieur de friction (b) des éléments de friction (62, 64) se situe dans la plage de 1,30 à 1,80, de préférence de 1,35 à 1,70, et/ou **en ce qu'**un rapport d'un diamètre extérieur de friction (b) des éléments de friction (62, 64) à un diamètre intérieur de friction (c) des éléments de friction (62, 64) se situe dans la plage de 1,10 à 1,30, de préférence de 1,15 à 1,25.
